# EUROPÄISCHE PATENTANMELDUNG

(11) **EP 1 295 697 A1**
(43) Veröffentlichungstag der Anmeldung: **26.03.2003**
(21) Anmeldenummer: 02018987.4
(22) Anmeldetag: 27.08.2002
(51) Int. Cl.: B29C 65/20

(54) **Einrichtung zum stirnseitigen Verschweissen von rohrförmigen Teilen aus thermoplastischem Material**

(30) Priorität: 24.09.2001 DE 10146855
(71) Anmelder: Georg Fischer Rohrverbindungstechnik GmbH, 78224 Singen (DE)
(72) Erfinder: Kohler, Hanspeter, 8203 Schaffhausen (CH)
(74) Vertreter: Weiss, Wolfgang, Dr.

(57) **Zusammenfassung**

Es wird eine Einrichtung (1) zum stirnseitigen Verschweissen von rohrförmigen Teilen aus thermoplastischem Material vorgeschlagen umfassend ein Grundgestell (3), eine mit dem Grundgestell verbundene feststellbare Spannvorrichtung (5), eine in Richtung auf die feststellbare Spannvorrichtung verschiebbare Spannvorrichtung (6), wobei die miteinander zu verschweissenden rohrförmigen Teilen in jeweils einer Spannvorrichtung (5,6) koaxial zueinander gehalten und zusammengepresst werden, eine Bearbeitungsvorrichtung zum Vorbehandeln der zu verschweissenden rohrförmigen Teilen, eine Heizvorrichtung zum Aufheizen der zu verschweissenden rohrförmigen Teilen und eine Prozesssteuerung (2) zur Durchführung des Verbindungsvorganges, wobei einen Sensor (14) für die Erfassung der Umgebungstemperatur fest verbunden mit dem Grundgestell (3) angeordnet ist. Die Einrichtung bringt, unter Gewährleistung der Festigkeit der Schweissverbindung, eine erhebliche Arbeitszeiteinsparung.

## Beschreibung

Die Erfindung bezieht sich auf eine Einrichtung zum stirnseitigen Verschweissen von rohrförmigen Teilen aus thermoplastischem Material umfassend ein Grundgestell, eine mit dem Grundgestell verbundene feststellbare Spannvorrichtung, eine in Richtung auf die feststellbare Spannvorrichtung verschiebbare Spannvorrichtung, wobei die miteinander zu verschweissenden rohrförmigen Teilen von jeweils einer Spannvorrichtung koaxial zueinander gehalten und zusammengepresst werden, eine Bearbeitungsvorrichtung zum Vorbehandeln der zu verschweissenden rohrförmigen Teilen, eine Heizvorrichtung zum Aufheizen der zu verschweissenden rohrförmigen Teilen und eine Prozesssteuerung zur Durchführung des Verbindungsvorganges.

Im Rohrleitungsbau werden zunehmend Kunststoffformteile, wie beispielsweise Rohrbögen und Rohrverzweigungen, eingesetzt, die auf der Baustelle miteinander zu einem Rohrleitungssystem verschweisst werden. Die Kunststoffrohrformteile werden in einer speziellen Schweisseinrichtung axial zueinander ausgerichtet, eingespannt und rechtwinklig und plan bearbeitet. Die Rohrenden werden anschliessend aufgeheizt und axial zusammengepresst. Während des Schweissvorganges werden die Kunststoffrohrformteile von Spannsystemen an die Schweissvorrichtung festgehalten. Nach dem Schweissvorgang müssen die Kunststoffrohrformteile solange zusammengepresst werden, bis die Schweissnaht und der Verbindungsbereich der Rohrenden abgekühlt sind und mechanisch belastet werden können.

Aus der EP-B-535 454 ist eine gattungsgemässe Einrichtung zum stirnseitigen Verschweissen von rohrförmigen Teilen aus thermoplastischem Material bekannt, die zwei Spannvorrichtungen, eine Bearbeitungsvorrichtung, eine Heizvorrichtung und eine Prozesssteuerung umfasst. Die Zeit, die nach dem Schweissvorgang für das Zusammenpressen der rohrförmigen Teilen eingehalten werden muss, damit gewährleistet werden kann, dass die miteinander verschweissten Teile mechanisch belastbar sind, ist vor allem abhängig von der Temperaturdifferenz zwischen der Schweissnahttemperatur und der Umgebungstemperatur. Die Schweissnahttemperatur und auch die Temperatur des Kunststoffmaterials im Verbindungsbereiches kann nicht unmittelbar gemessen werden. Eine aussagekräftige Bestimmung der Umgebungstemperatur ist deshalb entscheidend für die Dauer des Abkühlschrittes als Teil des Verbindungsverfahrens. Wenn die Abkühlzeit bei gleichbleibender Gewährleistung der Festigkeit der Schweissverbindung verkürzt werden kann, sind grosse Einsparungen der Zykluszeit des Verbindungsvorganges möglich.

Ausgehend von diesem Stand der Technik ist es Aufgabe der Erfindung, eine gattungsgemässe Einrichtung zum stirnseitigen Verschweissen von rohrförmigen Teilen aus thermoplastischem Material anzugeben, die, bei Einhaltung der Gewährleistung der Festigkeit der Schweissverbindung, eine möglichst kurze Abkühlzeit benötigt.

Diese Aufgabe wird gelöst durch eine Einrichtung zum stirnseitigen Verschweissen von rohrförmigen Teilen aus thermoplastischem Material umfassend ein Grundgestell, eine mit dem Grundgestell verbundene feststellbare Spannvorrichtung, eine in Richtung auf die feststellbare Spannvorrichtung verschiebbare Spannvorrichtung, wobei die miteinander zu verschweissenden rohrförmigen Teilen von jeweils einer Spannvorrichtung koaxial zueinander gehalten und zusammengepresst werden, eine Bearbeitungsvorrichtung zum Vorbehandeln der zu verschweissenden rohrförmigen Teilen, eine Heizvorrichtung zum Aufheizen der zu verschweissenden rohrförmigen Teilen und eine Prozesssteuerung zur Durchführung des Verbindungsvorganges, wobei einen Sensor für die Erfassung der Umgebungstemperatur fest verbunden mit dem Grundgestell angeordnet ist.

Bevorzugte Weiterbildungen der Erfindung ergeben sich aus den abhängigen Ansprüchen.

Es ist von Vorteil, dass die Umgebungstemperatur möglichst genau und unbeeinflusst von der Temperatur der Heizvorrichtung erfasst werden kann. Dies wird dadurch erreicht, dass der Sensor für die Erfassung der Umgebungstemperatur an einem von der Schweissstelle entfernten Bereich des Grundgestelles angeordnet ist.

Es ist weiter von Vorteil, dass die Erfassung der Umgebungstemperatur ohne grösseren zusätzlichen Aufwand durchgeführt und einfach und störungsfrei an die Prozesssteuerung übermittelt werden kann. Dies wird dadurch erreicht, dass der Sensor für die Erfassung der Umgebungstemperatur in einem Steckergehäuse an einem von der Schweissstelle entfernten Bereich des Grundgestelles angeordnet ist. Dies wird weiter dadurch erreicht, dass der Sensor im Steckergehäuse einer weiteren Messvorrichtung an einem von der Schweissstelle entfernten Bereich des Grundgestelles integriert angeordnet ist. Dies wird auch dadurch erreicht, dass zwischen dem Sensor und der Prozesssteuerung Leitungen vorgesehen sind, die mit den Leitungen zwischen der weiteren Messvorrichtung und der Prozesssteuerung kompatibel und kombinierbar angeordnet sind.

Ein Ausführungsbeispiel der Erfindung wird anhand der Figuren beschrieben. Es zeigen:
Figur 1 eine Sicht auf eine erfindungsgemässe Einrichtung zum stirnseitigen Verschweissen von rohrförmigen Teilen aus thermoplastischem Material,
Figur 2 eine bereichsweise geschnittene seitliche Sicht auf die Einrichtung von Figur 1,
Figur 3 einen Schnitt durch eine Messeinrichtung der Einrichtung von Figur 1 mit einem darin integrierten Sensor,
Figur 4 eine Explosionsdarstellung der Messeinrichtung von Figur 3 und
Figur 5 eine Explosionsdarstellung einer weiteren Messeinrichtung mit einem darin integrierten Sensor.

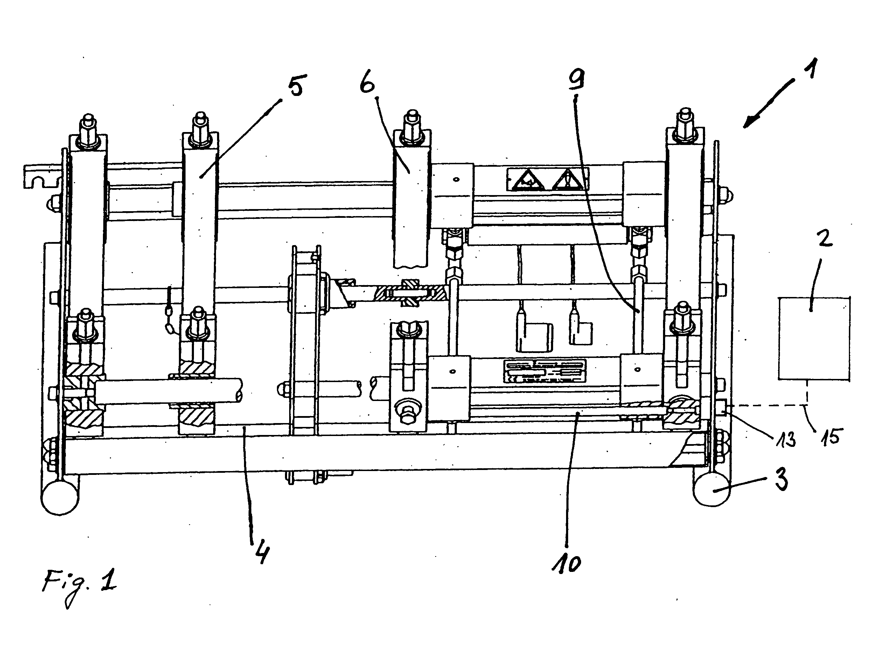

In Figur 1 ist eine Stumpfschweissmaschine 1 für die Verbindung von Kunststoffrohrleitungen mit einem Durchmesser von bis zu 630 mm dargestellt. Die Maschine wird im Rohrleitungsbau von Gas-, Wasser- und Abwassersysteme eingesetzt. Der Prozessablauf des Verbindungsvorganges mittels dieser Maschine kann von einer Prozesssteuerung 2 vollautomatisch oder CNC (Computer Numerical Controlled) gesteuert werden. Als Kunststoffmaterial für die Rohrleitungen sind beispielsweise PE, PP oder PVDF möglich. Die Stumpfschweissmaschine 1 besteht im Wesentlichen aus einem Grundgestell 3 und zwei Spannvorrichtungen 5,6, die über einen Schlitten 4 in der Längsrichtung des Grundgestelles verschiebbar angeordnet sind. Eine erste Spannvorrichtung 5 wird auf dem Grundgestell 3 fixiert und eine zweite Spannvorrichtung 6 ist über den Schlitten 4 verschiebbar in Richtung auf die erste Spannvorrichtung 5.

Die Kunststoffrohrformteile der jeweils miteinander zu verbindenden Rohrleitungen werden zwischen halbkreisförmige Spannbacken 7,8 eingespannt und in die Spannvorrichtungen 5,6 festgehalten. Die Rohrformteile werden währen des gesamten Verbindungsvorganges koaxial zueinander ausgerichtet gehalten. Ein erster Schritt des Verbindungsverfahrens ist die Vorbereitung der Stirnseiten vor dem eigentlichen Schweissvorgang. Die Stirnseiten werden mit einem Hobel rechtwinklig zur Rohrachse angeplant. Hiermit wird erreicht, dass die Rohrformteile planparallel mit einander verschweisst werden können. Ein nächster Verfahrensschritt ist das Aufheizen der Stirnseiten. Das Kunststoffmaterial der miteinander zu verbindenden Rohrformteilen muss im Verbindungsbereich bis über die Schweisstemperatur aufgeheizt werden. Sowohl eine Vorrichtung zur Vorbehandlung der Rohrenden als auch eine Heizvorrichtung sind im mittleren Bereich der Schweissmaschine angeordnet. Sie sind beide ein- und ausklappbar zwischen den Rohrenden angeordnet.

Nachdem die Schweisstemperatur erreicht wurde, werden die zwei Rohrformteile zusammengepresst und unter einem bestimmten Anpressdruck festgehalten. Die Stumpfschweissmaschine 1 umfasst im Weiteren verschiedene Überwachungseinrichtungen und Sensoren zur Messung der für den Verbindungsvorgang wichtigen Parameter. Ein wichtiger Parameter ist die Längenmessung der Rohrverbindung. Die Längenmessung ist notwendig für die Systemüberwachung. Mit der Längenmessung kann festgestellt werden, ob die Heizvorrichtung entfernt wurde, ob die Spannvorrichtungen während dem Schweissvorgang oder während der Abkühlphase geöffnet wird und ob die Rohrformteilen in axialer Richtung rutschen. Die Längenmessung ist auch notwendig für die Überwachung des axialen Längenmasses vor, während und nach dem Schweissvorgang. Mit der Längenmessung wird überwacht, ob die miteinander zu verbindenden Rohrformteile in den beiden Spannvorrichtungen in der axialen Richtung nicht zu wenig oder zu weit zusammengepresst werden. Hiermit wird erreicht, dass die Rohrverbindung auf die für das Rohrleitungssystem vorgeschriebene Länge hergestellt wird.

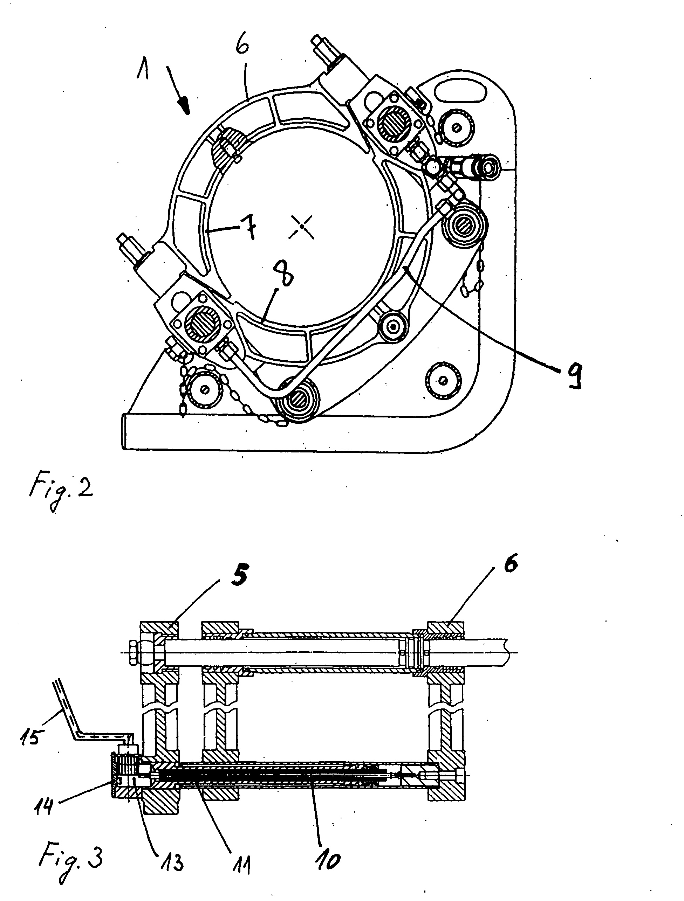

In Figur 2 ist die Stumpfschweissmaschine 1 aus Figur 1 nochmals in einer Seitenansicht dargestellt. Gut ersichtlich sind hier die Spannbacken 7,8 und eine Leitung 9 für die Hydraulik, die notwendig ist um die Spannvorrichtungen 5,6 während den Schweiss- und Abkühlphasen des Verbindungsvorganges unter einem bestimmten Anpressdruck zusammengepresst zu halten.

In Figur 3 ist schematisch in einem Schnitt parallel zur Längsrichtung ein Bereich der Schweissmaschine 1 dargestellt, in dem eine Längenmessvorrichtung 10 angeordnet ist. Die Längenmessvorrichtung 10 befindet sich im unteren Bereich des Grundgestelles 3 und erfasst der Abstand zwischen den zwei Spannvorrichtungen 5,6 auf beiden Seiten der Schweissnaht. Die Längenmessung kann über ein Linearpotentiometer 11 oder über eine andere Messeinrichtung erfolgen, beispielsweise über ein elektrischer Linearmassstab, ein Drehpotentiometer mit einem Gewinde und einem Kabelzug, oder ein Inkrementalgeber an einer Spindel bei einem elektromotorisch angetriebenen Schlitten 4. Die elektrischen Signale des Potentiometers 11 werden über elektrische Leitungen zur Prozesssteuerung 2 übermittelt. Die Längenmessvorrichtung 10 weist hierzu in einem Randbereich der Schweissmaschine 1 ein Steckergehäuse 13 auf. Das Steckergehäuse 13 befindet sich an einer Stelle, die so weit wie möglich von der Heizvorrichtung und von dem Schweissbereich der Schweissmaschine 1 entfernt ist. Im Steckergehäuse 13 der Längenmessvorrichtung 10 ist einen Temperatursensor 14 angeordnet.

Dieser Sensor 14 misst die Temperatur der Umgebung der Schweissmaschine, die auf einer Baustelle in einem Rohrgraben oder in einer Werkstatt, das heisst bei stark unterschiedlichen Umgebungstemperaturen eingesetzt werden kann. Für eine aussagekräftige Messung der Umgebungstemperatur ist es deshalb wichtig, dass das Steckergehäuse 13 mit dem Grundgestell 3 fest verbunden ist oder dass einen gut wärmeleitenden Kontakt zwischen Temperatursensor 14 und dem Grundgestell 3 gewährleistet ist. Durch die Anordnung des Temperatursensors 14 in einem Bereich der Stumpfschweissmaschine 1, der möglichst weit entfernt ist von der Heizvorrichtung im mittleren Bereich der Maschine, wird erreicht, dass eine aussagekräftige Temperaturmessung durchgeführt werden kann. Die Signale des Temperatursensors 14 werden über ein mehradriges Kabel 15 zur Prozesssteuerung 2 übermittelt. Das Kabel 15 enthält auch die Leitungen für die Längenmessvorrichtung 10, sowie alle anderen Leitungen, die für die Prozessüberwachung notwendig sind.

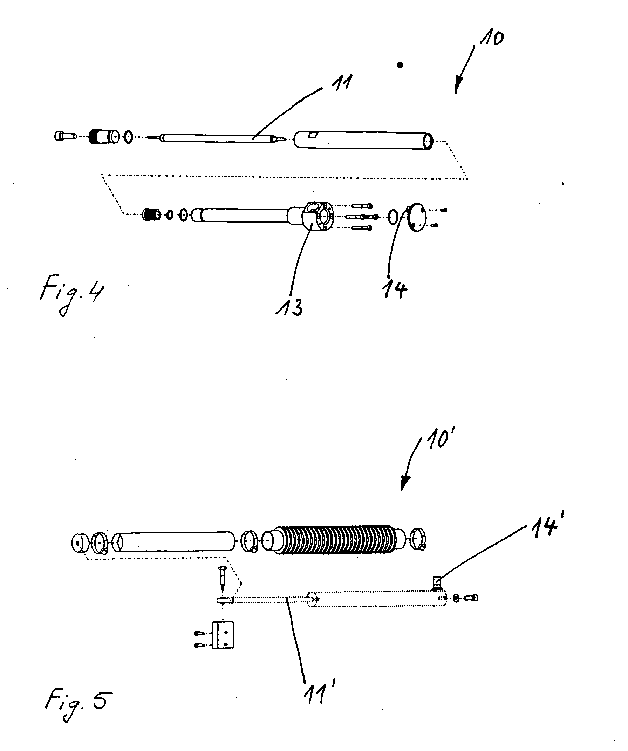

In den Figuren 4 und 5 sind zwei unterschiedliche Ausführungsbeispielen einer Längenmessvorrichtung 10,10' dargestellt. In den Explosionsdarstellungen ist ersichtlich, wie die Längenmessvorrichtungen zusammengesetzt sind. In Figur 4 sind das Steckergehäuse 13 und der Temperatursensor 14 ersichtlich. Der Temperatursensor 14 ist an einer Aussenwand des Steckergehäuses 13 angeordnet. Weil in dieser Anordnung die Umgebungstemperatur zuverlässig gemessen werden kann, kann auch die Prozesssteuerung zuverlässig berechnen, wann die Temperatur in der Schweissnaht und im Verbindungsbereich der Rohrverbindung soweit abgekühlt ist, dass die Rohrverbindung mechanisch wieder voll belastet werden kann.

Durch die genaue Messung der Umgebungstemperatur kann eine erhebliche Verkürzung der Abkühlphase erreicht werden. Weil die Abkühlphase einen wesentlichen Anteil des Verbindungsvorganges ausmacht, können somit die Zykluszeiten erheblich verkürzt werden und können in der selben Arbeitszeit mit der selben Maschine mehr Rohrverbindungen hergestellt werden. Der Temperatursensor 14 kann auch in einem anderen Bereich der Stumpfschweissmaschine 1 angeordnet werden, solange darauf geachtet wird, dass die Umgebungstemperatur möglichst aussagekräftig und unverfälscht durch die Temperatur der Heizvorrichtung und der Schweissverbindung erfasst wird.

Der Unterschied zwischen der Anordnung von Figur 4 und Figur 5 ist, dass in Figur 5 der Temperatursensor 14 direkt im Schutzgehäuse der Längenmessvorrichtung integriert ist. Die Messung findet in jedem Fall an der Maschine statt, jedoch möglichst fern jeder Wärmequelle. Die Integration der Messleitung in dem mehradrigen Kabel 15 zwischen dem Temperatursensor 14 und der Prozesssteuerung 2 macht der Umbau der Maschine sehr einfach. Der Montageaufwand für diese Erweiterung wird auf ein Minimum beschränkt. Weil der Temperatursensor einfach in einem Steckergehäuse untergebracht werden kann, kann er auch leicht vor Beschädigungen geschützt werden.

## Patentansprüche

1. Einrichtung (1) zum stirnseitigen Verschweissen von rohrförmigen Teilen aus thermoplastischem Material umfassend ein Grundgestell (3), eine mit dem Grundgestell verbundene feststellbare Spannvorrichtung (5), eine in Richtung auf die feststellbare Spannvorrichtung verschiebbare Spannvorrichtung (6), wobei die miteinander zu verschweissenden rohrförmigen Teilen in jeweils einer Spannvorrichtung (5,6) koaxial zueinander gehalten und zusammengepresst werden, eine Bearbeitungsvorrichtung zum Vorbehandeln der zu verschweissenden rohrförmigen Teilen, eine Heizvorrichtung zum Aufheizen der zu verschweissenden rohrförmigen Teilen und eine Prozesssteuerung (2) zur Durchführung des Verbindungsvorganges, **dadurch gekennzeichnet, dass** ein Sensor (14) für die Erfassung der Umgebungstemperatur fest verbunden mit dem Grundgestell (3) angeordnet ist.

2. Einrichtung nach dem Anspruch 1, **dadurch gekennzeichnet, dass** der Sensor (14) für die Erfassung der Umgebungstemperatur an einem von der Schweissstelle entfernten Bereich des Grundgestelles (3) angeordnet ist.

3. Einrichtung nach einem der Ansprüche 1 oder 2, **dadurch gekennzeichnet, dass** der Sensor (14) für die Erfassung der Umgebungstemperatur in einem Steckergehäuse (13) an einem von der Schweissstelle entfernten Bereich des Grundgestelles (3) angeordnet ist.

4. Einrichtung nach einem der Ansprüche 1 bis 3, **dadurch gekennzeichnet, dass** der Sensor (14) im Steckergehäuse (13) einer weiteren Messvorrichtung (10) an einem von der Schweissstelle entfernten Bereich des Grundgestelles (3) integriert angeordnet ist.

5. Einrichtung nach einem der Ansprüche 1 bis 4, **dadurch gekennzeichnet, dass** zwischen dem Sensor (14) und der Prozesssteuerung (2) Leitungen (15) vorgesehen sind, die mit den Leitungen zwischen der weiteren Messvorrichtung (10) und der Prozesssteuerung (2) kompatibel und kombinierbar angeordnet sind.

6. Einrichtung nach einem der Ansprüche 1 bis 5, **dadurch gekennzeichnet, dass** die weitere Messvorrichtung als eine Längenmessvorrichtung (10) zur Erfassung der Distanz zwischen den beiden Spannvorrichtungen (5,6) ausgebildet ist.
